# EUROPEAN PATENT APPLICATION

(11) **EP 4 223 623 A1**
(43) Date of publication of application: **09.08.2023**
(21) Application number: 23154033.7
(22) Date of filing: 30.01.2023
(51) Int. Cl.: B62H 1/02

(54) **KICKSTAND FOR A BICYCLE**

(30) Priority: 03.02.2022 IT 202200001910
(71) Applicant: Ursus S.P.A., 36027 Rosa' VI (IT)
(72) Inventor: FERRONATO, Sergio, ROSÀ (VI) (IT)
(74) Representative: Marchioro, Paolo

(57) **Abstract**

The present invention concerns a device (10) for fixing a cycle stay to a low chainstay of a bicycle, comprising:
- a cycle stay (11) comprising a fixing bracket (12) and a rest leg (13), said rest leg (13) being pivoted to said fixing bracket (12);
- a box of the central movement (14) of a bicycle;
- a rear fork (15);
- a low chainstay (16) interposed between said box of the central movement (14) and said rear fork (15), said low chainstay (16) having a longitudinal development axis (X).

The low chainstay (16) comprises a fixing plate (17) fixed to the low chainstay (16) by welding, said fixing plate (17) being facing substantially downwards with respect to a normal setup of use of said low chainstay (16), and said fixing bracket (12) being fixed to the fixing plate (17) with corresponding fixing means.

## Description

The invention concerns a device for fixing a cycle stay to a low chainstay of a bicycle.

Nowadays a cycle stay is generally made up of:
- a fixing bracket, configured to be fixed to a central or rear portion of the frame of a bicycle;
- a rest leg articulated to the fixing bracket.

A cycle stay can therefore be:
- of central type: fixed under the frame in a portion between the two wheels, to the lower chainstays of the frame, near the seat of the central movement;
- of the rear type: fixed to a low chainstay, usually near or at the rear wheel.

The term "rear" means on the opposite side to the normal forward direction of a bicycle.

The expression "low chainstays" indicates the two tubular elements of the frame, substantially horizontal, between which the rear wheel of the bicycle is interposed, whereas "high chainstays" indicates the two corresponding tubular elements of the frame, substantially oblique, between which the rear wheel is interposed, and which develop between the seat tube and the low chainstays. Each low chainstay is joined to the respective high chainstay by a corresponding "rear fork", normally welded to the converging ends of a low chainstay and the corresponding high chainstay.

Nowadays the fixing of a cycle stay to the low chainstay of a bicycle is done by fixing the fixing bracket of the cycle stay either to the rear end section of the low chainstay, or to the rear fork.

The fixing bracket is generally fixed directly to the low chainstay by means of threaded connections.

The low chainstay generally consist of a tubular body made of a metallic material whose main peculiarity is the light-weight, therefore the connection of the fixing bracket to the low chainstay by means of threaded connections can be little robust and prone to undergo deformations following particularly intense stresses.

To overcome this drawback, solutions are known today that envisage mounting on the low chainstay an auxiliary body by means of threaded connections, to which auxiliary body the fixing bracket of the cycle stay is then attached by means of further threaded connections.

These solutions, although known and widespread, give rise to situations in which the fixing bracket protrudes laterally from the frame of the bicycle, causing an encumbrance which is unfavourable in aerodynamic terms and dangerous for a user who can rub against it with a calf.

In addition, such fixing systems envisage resorting to other components, including numerous threaded connections, which entail an additional cost for the buyer, also in terms of the mounting.

The task of the present invention is to develop a device for fixing a cycle stay to a low chainstay of a bicycle, capable of obviating the aforementioned drawbacks and limitations of the known art.

In particular, an object of the invention is to develop a device capable of reducing the encumbrance generated by the cycle stay.

Another object of the invention is to develop a device that allows to set up a cycle stay in a less dangerous position for a user.

A further object of the invention is to develop a device that makes the mounting of the cycle stay easier and faster.

Still, an object of the invention is to develop a device for fixing a cycle stay to a low chainstay of a bicycle that has a better aesthetic impact than what is known.

The task as well as the aforementioned objects are achieved by a device for fixing a cycle stay to a low chainstay of a bicycle according to claim 1.

Further characteristics of the device according to claim 1 are described in the dependent claims.

The task and the aforementioned objects, together with the advantages that will be mentioned below, are highlighted by the description of eight embodiments of the invention, which are given, by way of indication but not limitation, with reference to the attached drawing tables, where:
- Figure 1 represents a perspective view of a device according to the invention in a first embodiment thereof;
- Figure 1A represents another perspective view of the device according to the invention in a first embodiment thereof;
- Figure 2 represents a cross-section of the device of Figure 1;
- Figure 3 represents a longitudinal section of the device of Figure 1;
- Figure 3A represents another perspective view of the device of Figures 1 to 3;
- Figure 4 represents a perspective view of a device according to the invention in a second embodiment thereof;
- Figure 5 represents a cross-section of the device of Figure 4;
- Figure 6 represents a longitudinal section of the device of Figure 4;
- Figure 6A represents another perspective view of the device of Figures 4 to 6;
- Figure 7 represents a perspective view of a device according to the invention in a third embodiment thereof;
- Figure 8 represents a cross-section of the device of Figure 7;
- Figure 9 represents a longitudinal section of the device of Figure 7;
- Figure 9A represents another perspective view of the device of Figures 7 to 9;
- Figure 10 represents a perspective view of a device according to the invention in a fourth embodiment thereof;
- Figure 11 represents a cross-section of the device of Figure 10;
- Figure 12 represents a longitudinal section of the device of Figure 10;
- Figure 12A represents another perspective view of the device of Figures 10 to 12;
- Figure 13 represents a perspective view of a device according to the invention in a fifth embodiment thereof;
- Figure 14 represents a cross-section of the device of Figure 13;
- Figure 15 represents a longitudinal section of the device of Figure 13;
- Figure 16 represents a perspective view of a device according to the invention in a sixth embodiment thereof;
- Figure 17 represents a cross-section of the device of Figure 16;
- Figure 18 represents a longitudinal section of the device of Figure 16;
- Figure 18A represents another perspective view of the device of Figures 16 to 18;
- Figure 19 represents a perspective view of a device according to the invention in a seventh embodiment thereof;
- Figure 20 represents a cross-section of the device of Figure 19;
- Figure 21 represents a longitudinal section of the device of Figure 19;
- Figure 21A represents another perspective view of the device of Figures 19 to 21;
- Figure 22 represents a perspective view of a device according to the invention in an eighth embodiment thereof;
- Figure 23 represents a cross-section of the device of Figure 22;
- Figure 24 represents a bottom plan view of the device of Figure 22;
- Figure 25 represents a longitudinal section of the device of Figure 22.

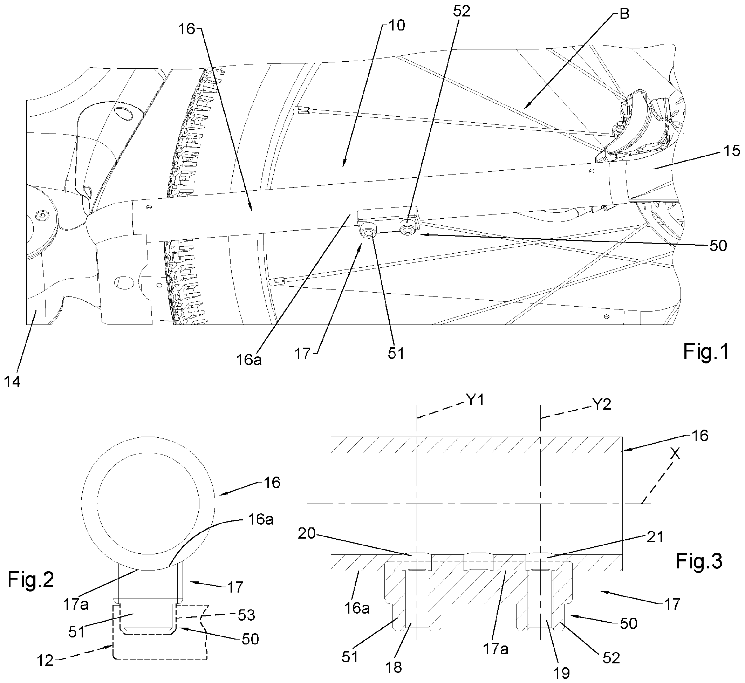

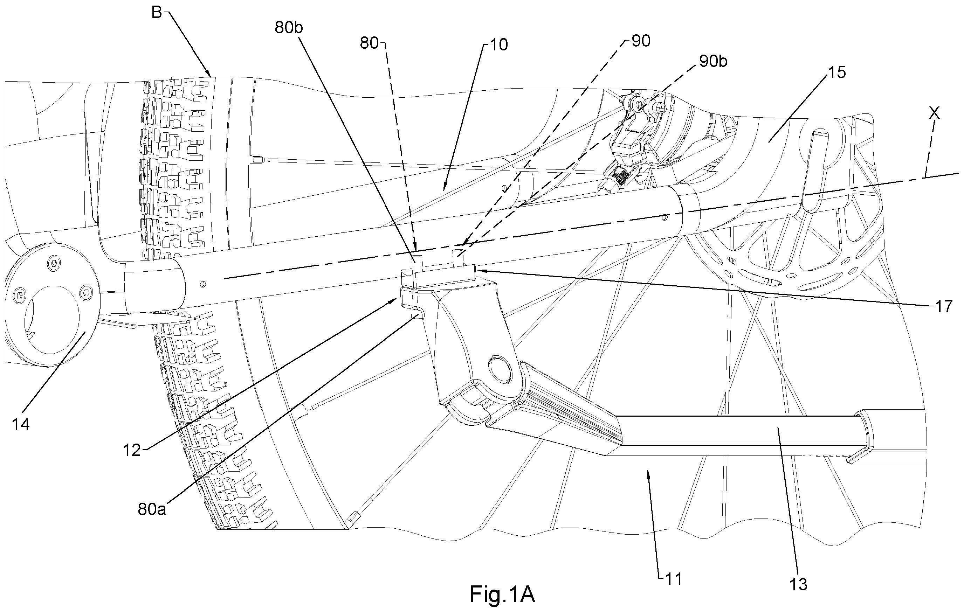

With reference to the Figures 1, 1A, 2, 3 and 3A, a device for fixing a cycle stay to a low chainstay of a bicycle according to the invention is indicated, as a whole of a first embodiment, with the number **10**.

The device **10** comprises:
- a cycle stay **11**, visible in Figure 1A, comprising a fixing bracket **12** and a rest leg **13**, said rest leg **13** being pivoted to said fixing bracket **12**;
- a box of the central movement **14** of a bicycle **B** and a rear fork **15**;
- a low chainstay **16** interposed between the box of the central movement **14** and said rear fork **15**, said low chainstay **16** having a longitudinal development axis **X**.

The low chainstay **16** is to be understood as being a tubular body.

The peculiarity of the device **10** according to the invention lies in the fact that the low chainstay **16** comprises a fixing plate **17** fixed to said low chainstay **16** by welding.

In particular, the fixing plate **17** faces substantially downwards with respect to a normal setup of use of said low chainstay **16**, i.e. a setup in which a bicycle **B**, of which the low chainstay **16** is part, is in a vertical setup.

The fixing bracket **12** is fixed to said fixing plate **17** with corresponding fixing means.

In the subsequent embodiments of the device according to the invention, said fixing means are to be understood as comprising one or more threaded connections, such as screws or other elements having at least one threaded section.

For example, these threaded connections consist of corresponding screws **80** and **90**.

The screws **80** and **90** respectively comprise a head **80a** and **90a** and a threaded shank **80b** and **90b**.

In the first embodiment represented in Figures 1 to 3, the fixing plate **17** has a substantially parallelepiped shape and has at least one fixing hole **18** developing according to a screwing direction **Y1** transverse to said longitudinal development axis **X** of the low chainstay **16**.

In particular, said fixing plate **17** has two fixing holes **18** and **19** both developing according to a respective fixing direction **Y1** and **Y2** transverse to the longitudinal development axis **X** of said low chainstay **16**.

The fixing holes **18** and **19** are arranged aligned along a same direction substantially parallel to said longitudinal development axis **X**.

In this first embodiment of the invention, the fixing holes **18**, **19** are threaded holes.

The low chainstay **16** has at least one through hole **20** at said at least one fixing hole **18** of said fixing plate **17**.

Such at least one through hole **20** of said low chainstay **16** is coaxial to said at least one fixing hole **18** of said fixing plate **17** and faces said fixing hole **18** of said fixing plate **17**.

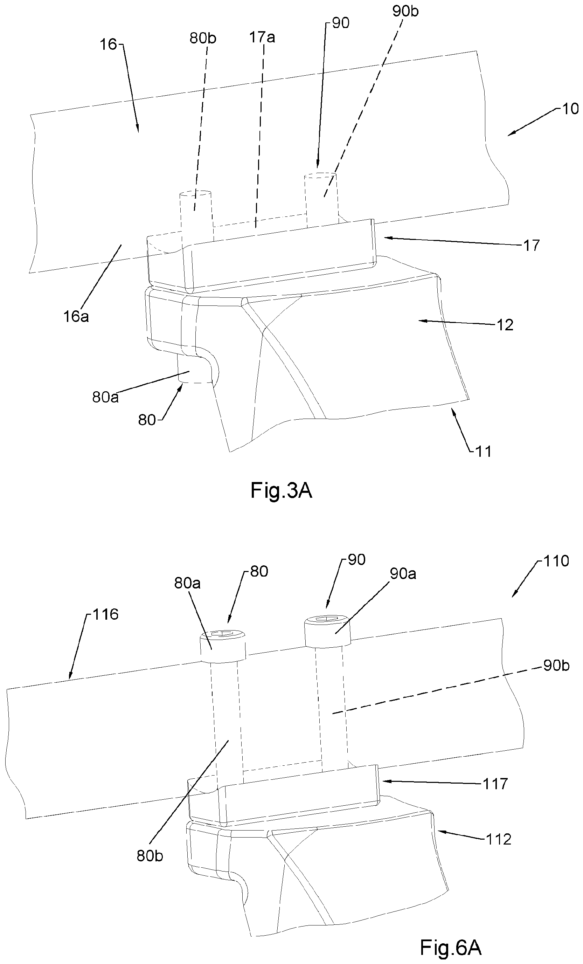

In particular, the low chainstay **16**, as clearly visible in the section of Figure 3, has two through holes **20** and **21** at a respective fixing hole **18** and **19** of said fixing plate **17**.

The fixing plate **17** comprises an anti-rotation shaping **50** configured to couple with a counter-shaped anti-rotation portion **53** defined on said fixing bracket **12** of said cycle stay **11**; said counter-shaped anti-rotation portion **53** is schematized in hatching in Figure 2.

In this first embodiment of the invention, the anti-rotation shaping **50** comprises two annular reliefs **51**, **52**.

This first embodiment of the device **10** according to the invention allows fixing a fixing bracket of a cycle stay **11** to the fixing plate **17** by screwing threaded connections comprising two screws **80** and **90**, each screw comprising a screwing head **80a** and **90a** and a threaded shank **80b** and **90b**.

The screws **80** and **90** are arranged substantially vertically with respect to a normal setup of use of the bicycle **B** of which said low chainstay **16** is part. The screws are screwed into a corresponding fixing hole **18** and **19** with the screwing heads, of which in Figure 1A the screwing head **80a** is visible, which are each arranged below the fixing plate **17**.

The threaded shanks **80b** and **90b** of the screws **80** and **90** can be screwed as far as entering into the lower chainstay **16** through the respective through holes **20** and **21**.

The fixing plate **17** has an upper rest face **17a** which is counter-shaped with respect to a corresponding fixing surface **16a** of said lower chainstay **16**.

The fixing plate **17** consists of a solid body made of metallic material.

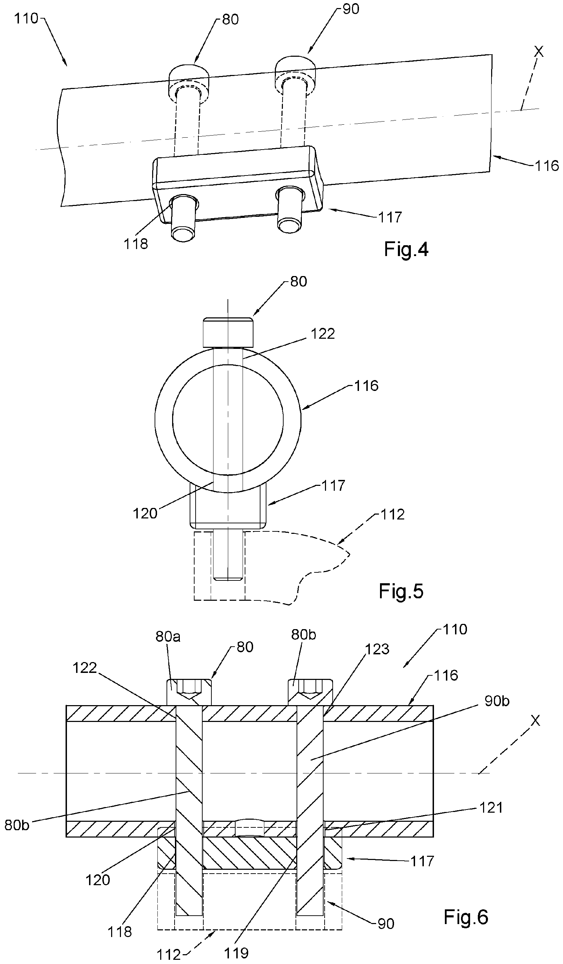

A second embodiment of the fixing device according to the invention is exemplified in Figures 4 to 6 and 6A and is indicated therein with the number **110**.

In said device **110** the low chainstay **116** has two through holes **120** and **122** at said at least one fixing hole **118** of said fixing plate **117**, said through holes **120** and **122** being coaxial to said at least one fixing hole **118**, a first through hole **120** being facing said at least one fixing hole **118**, the second through hole **122** being defined in a diametrically opposite position of said low chainstay **116** with respect to said longitudinal development axis **X** of the same low chainstay **116**.

In particular, in the proposed embodiment example, the low chainstay **116** has two pairs of coaxial through holes, respectively first coaxial through holes **120** and **122** and second coaxial through holes **121** and **123,** each pair of coaxial through holes being arranged at a corresponding fixing hole **118** and **119** of said fixing plate **117**.

This device **110** allows the introduction of corresponding threaded connections from top to bottom.

These threaded connections consist, for example, of corresponding screws **80** and **90**, where the heads **80a** and **90a** are positioned above the low chainstay **116**, as well visible in Figure 6A.

The fixing holes **118** and **119** of the fixing plate **117** can be threaded or unthreaded.

The threaded shanks **80b** and **90b** of the screws **80** and **90** are screwed directly to the fixing bracket **112** of the cycle stay, as exemplified in Figures 5 and 6.

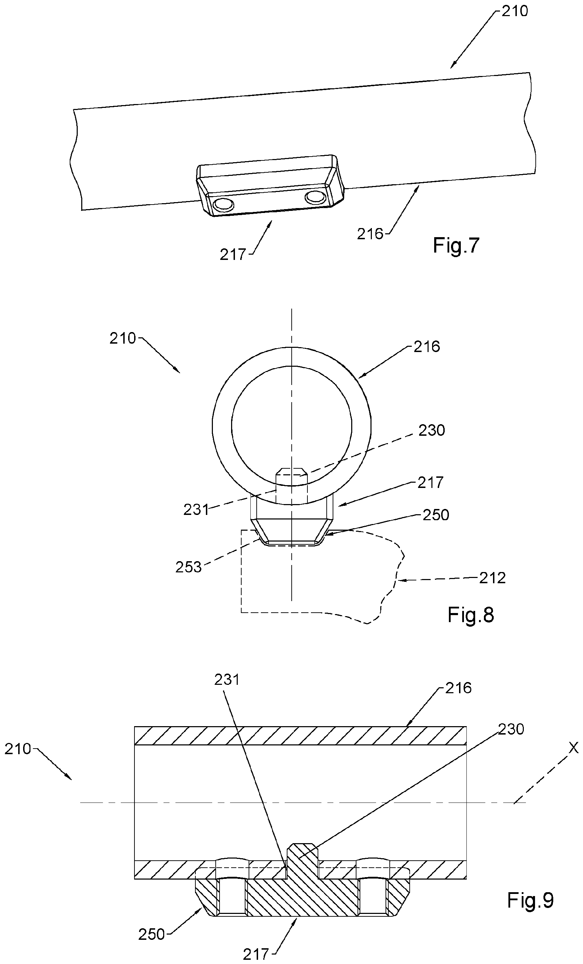

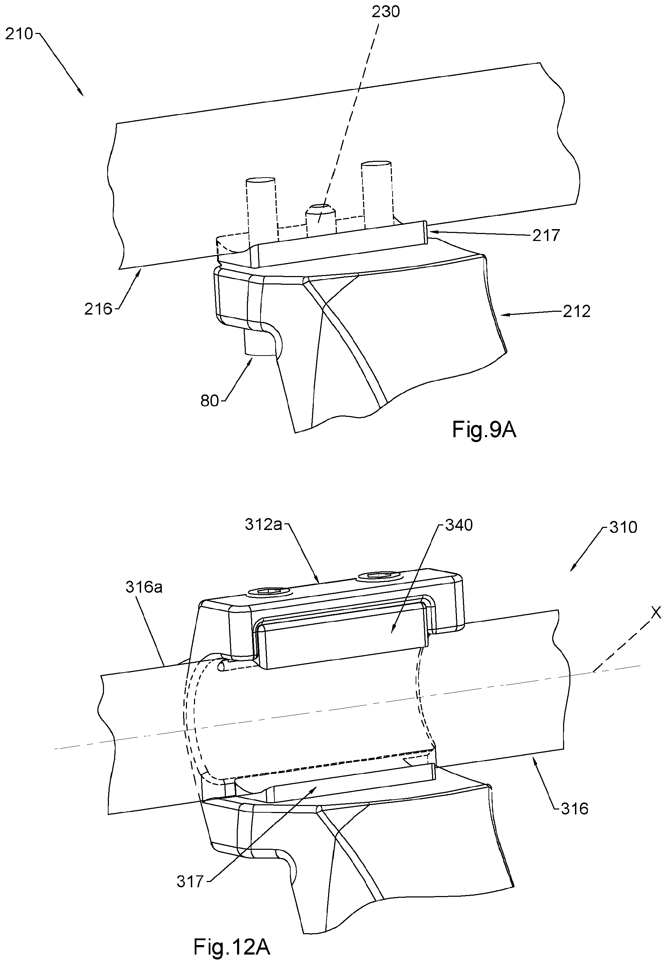

A third embodiment of the fixing device according to the invention is exemplified in Figures 7 to 9 and 9A, and is indicated therein with the number **210**.

In such a device **210** the fixing plate **217** comprises a centring relief **230** configured to couple with a corresponding counter-shaped centring hole **231** defined on said low chainstay **216**.

This technical solution comprising a centring relief **230** on the fixing plate **217** and a centring hole **231** defined on the low chainstay **216** is to be understood as repeatable on the embodiments of the invention described above as well as on the embodiments of the invention described below.

The coupling of the centring relief **230** with the centring hole **231** facilitates mounting since it makes the position of the fixing plate **217** more stable with respect to the low chainstay **216** during the welding operations.

The centring relief **230** consists, for example, of a cylindrical element developing from the fixing plate **217** in a substantially radial direction with respect to the development axis **X** of the low chainstay **216**.

In this third embodiment of the device according to the invention **210**, the fixing plate **217** comprises an anti-rotation shaping **250** configured to couple with a counter-shaped anti-rotation portion **253**, schematized in hatching in Figure 8, defined on said fixing bracket **212** of said cycle stay.

In this third embodiment of the invention, the anti-rotation shaping **250** is defined by an external portion of the same fixing plate **217** which has a substantially truncated pyramid profile, i.e. with a section that narrows down in a radial direction with respect to the longitudinal development axis **X** of the low chainstay **216** and in the direction away from the same longitudinal development axis **X**.

Such peculiar anti-rotation shaping **250** and the corresponding counter-shaped anti-rotation portion **253** allow to optimize the progressive centring of the fixing bracket **212** of the cycle stay while mounting the same cycle stay on the fixing plate **217**.

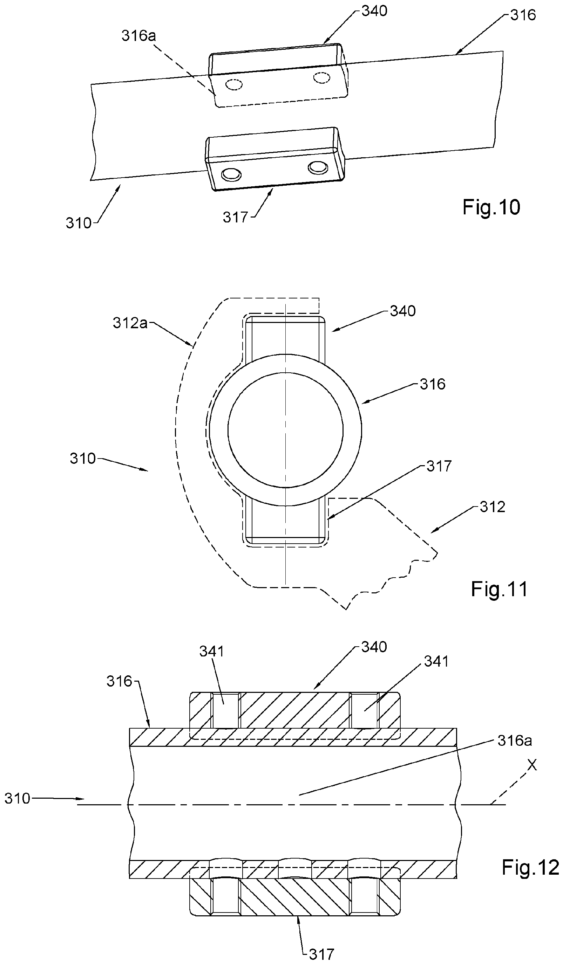

A fourth embodiment of the fixing device according to the invention is exemplified in Figures 10 to 12 and 12A, and is indicated therein with the number **310**.

Said device **310** comprises an auxiliary fixing plate **340** welded on a same section **316a** of said low chainstay **316** in an angularly different position with respect to the fixing plate **317**, with reference to said longitudinal development axis **X** of said low chainstay **316**.

In particular, the auxiliary fixing plate **340** is positioned on the low chainstay **316** in a diametrically opposite position with respect to the fixing plate **317**. The fixing bracket **312** has a 'C'-shaped hooking appendage **312a,** schematized in Figure 11 and represented in Figure 12A.

This hooking appendage **312a** is configured so as to couple both to the fixing plate **317** and to the auxiliary plate **340**.

The auxiliary plate **340** has one or more radial holes **341**, for example threaded, to allow the fixing of the hooking appendage **312a** also to the auxiliary plate **340** with threaded connection means, such as one or more corresponding screws.

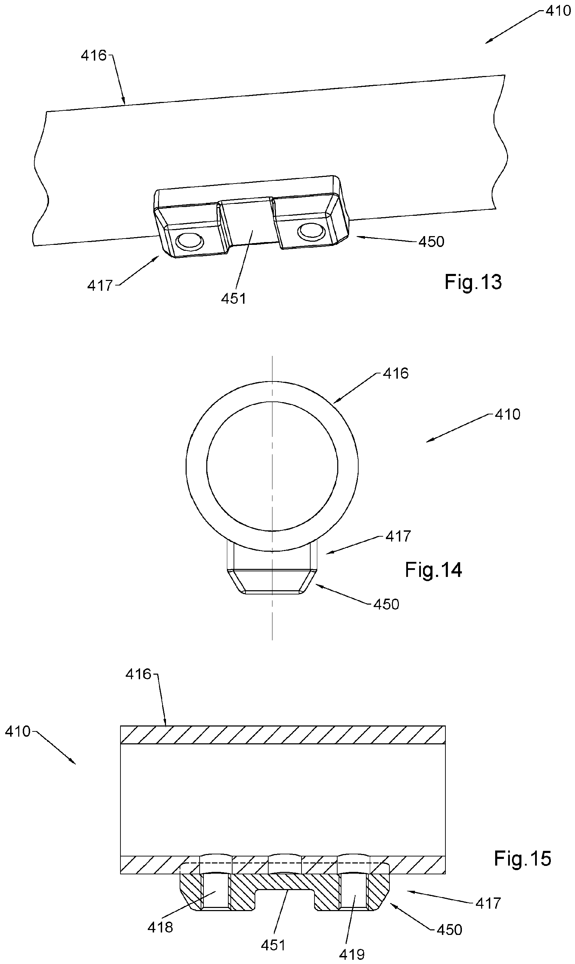

A fifth embodiment of the fixing device according to the invention is exemplified in Figures 13 to 15, and is indicated therein with the number **410**.

Said device **410** comprises a fixing plate **417**.

The fixing plate **417**, like for the other embodiments described herein, is fixed to said lower chainstay **416** by welding.

The fixing plate **417** faces substantially downwards with respect to a normal setup of use of said low chainstay **416**.

The fixing plate **417** comprises an anti-rotation shaping **450** configured to couple with a counter-shaped anti-rotation portion defined on the fixing bracket of the cycle stay.

In particular, the anti-rotation shaping **450** comprises a recess **451**.

Still in particular, this recess **451** is positioned between two fixing holes **418** and **419** of the same fixing plate **417**.

Still in particular, this recess **451** has a substantially parallelepiped shape, i.e. the surfaces that delimit it are substantially orthogonal to each other.

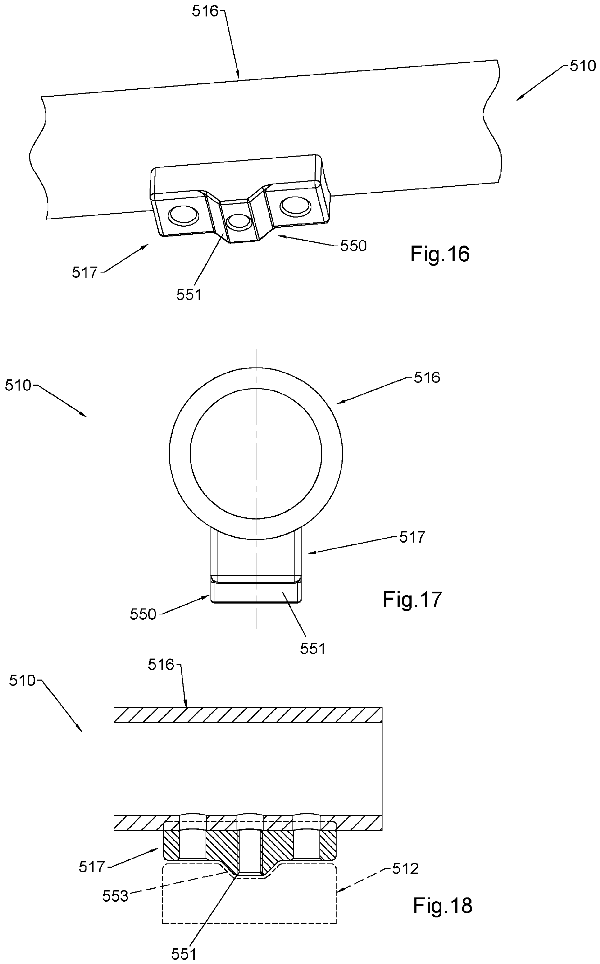

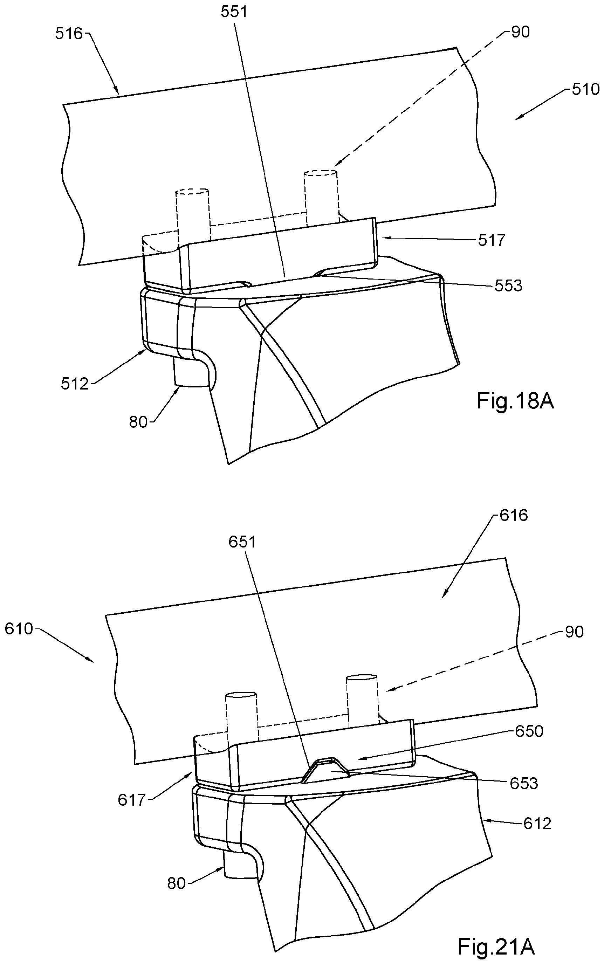

A sixth embodiment of the fixing device according to the invention is exemplified in Figures 16 to 18 and 18A, and is indicated therein with the number **510**.

Said device **510** comprises a fixing plate **517**.

The fixing plate **517** is fixed to said low chainstay **516** by welding.

The fixing plate **517** faces substantially downwards with respect to a normal setup of use of said low chainstay **516**.

The fixing plate **517** comprises an anti-rotation shaping **550** configured to couple with a counter-shaped anti-rotation portion **553** defined on the fixing bracket **512** of the cycle stay.

In particular, the anti-rotation shaping **550** comprises a wedge-shaped relief **551** that develops radially, with respect to said longitudinal development axis **X**.

This wedge-shaped relief **551** is positioned substantially in the centre of the fixing plate **517**.

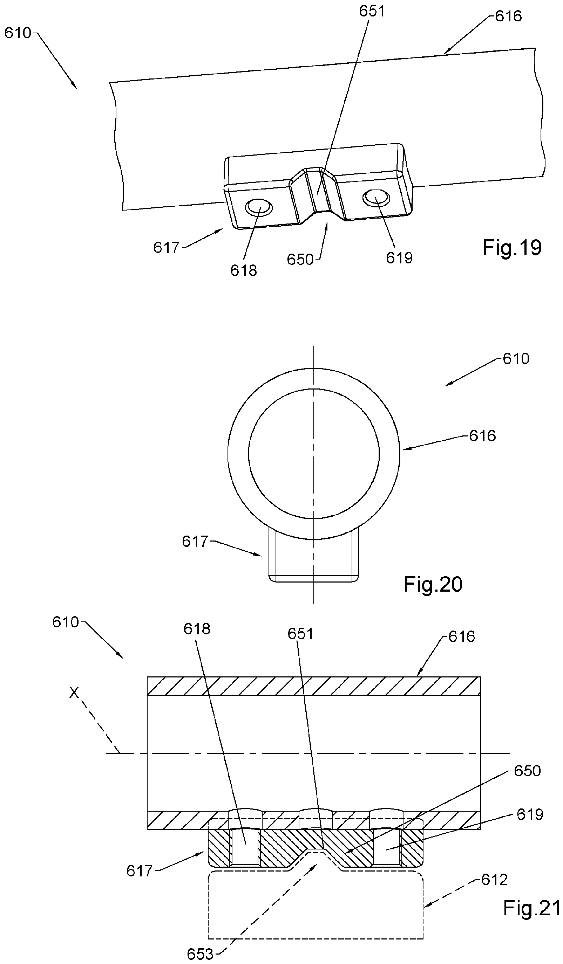

A seventh embodiment of the fixing device according to the invention is exemplified in Figures 19 to 21 and 21A, and is indicated therein with the number **610**.

Said device **610** comprises a fixing plate **617**.

The fixing plate **617**, like for the other embodiments described herein, is fixed to said low chainstay **616** by welding.

The fixing plate **617** faces substantially downwards with respect to a normal setup of use of said low chainstay **616**.

The fixing plate **617** comprises an anti-rotation shaping **650** configured to couple with a counter-shaped anti-rotation portion **653** defined on the fixing bracket **612** of the cycle stay.

In particular, the anti-rotation shaping **650** comprises a recess **651**.

Still in particular, this recess **651** is positioned between two fixing holes **618** and **619** of the same fixing plate **617**.

Still in particular, this recess **651** has a substantially truncated-pyramidal shape, i.e. at least a part of the surfaces that delimit it converge towards each other in a radial direction and from the outside towards the longitudinal development axis **X**.

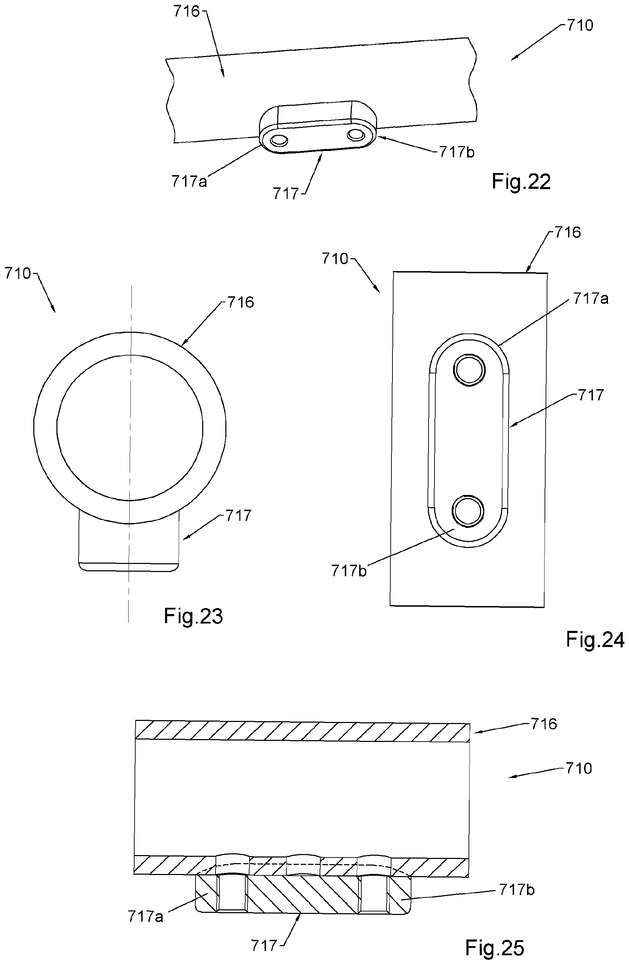

An eighth embodiment of the fixing device according to the invention is exemplified in Figures 22 to 25, and is indicated therein with the number **710**. Said device **710** comprises a fixing plate **717**.

The fixing plate **717**, like for the other embodiments described herein, is fixed to said lower chainstay **716** by welding.

The fixing plate **717** faces substantially downwards with respect to a normal setup of use of said low chainstay **716**.

The fixing plate **717** has a substantially parallelepiped shape with the two opposite front **717a** and rear **717b** ends having a semi-circular profile.

In general, with regard to all the above-described embodiments of the device according to the invention, the fixing plate is to be understood as being able to be positioned at any point of a low chainstay along the development direction **X**.

The different characteristics described above for each specific embodiment of the invention are to be understood as being combinable with each other where compatible.

It has in practice been established that the invention achieves the intended task and objects.

In particular, with the invention a device has been developed which is capable of reducing the encumbrance generated by the cycle stay.

In addition, with the invention a device has been developed that allows to set up a cycle stay in a less dangerous position for a user.

In addition, with the invention a device has been developed that makes the bicycle more aerodynamic.

Still, with the invention a device has been developed for fixing a cycle stay to a low chainstay of a bicycle of better aesthetic impact than what is known. Thanks to such a device according to the invention, the cycle stay can also be attached so that the heads of the screws are either below or above the low chainstay, in any case in a position that is not dangerous for a user.

Thanks to the presence of the anti-rotation shapings, there is an important recovery of the coupling plays between the cycle stay and the low chainstay of the bicycle.

The invention thus conceived is susceptible of numerous modifications and variations, all of which are within the scope of the inventive concept; moreover, all the details may be replaced by other technically equivalent elements.

In practice, the components and the materials used could be of any type, so long as they are compatible with the specific use, as well as the contingent dimensions and shapes, according to requirements and the state of the art. Where the features and techniques mentioned in any claim are followed by reference marks, such reference marks are to be understood as being affixed solely for the purpose of increasing the intelligibility of the claims and, consequently, such reference marks have no limiting effect on the interpretation of each element identified by way of example by such reference marks.

## Claims

1. Device (10) for fixing a cycle stay to a low chainstay of a bicycle, comprising:
- a cycle stay (11) comprising a fixing bracket (12) and a rest leg (13), said rest leg (13) being pivoted to said fixing bracket (12);
- a box of the central movement (14) of a bicycle;
- a rear fork (15);
- a low chainstay (16) interposed between said box of the central movement (14) and said rear fork (15), said low chainstay (16) having a longitudinal development axis (X),
**characterized in that**
said low chainstay (16) comprises a fixing plate (17) fixed to said low chainstay (16) by welding, said fixing plate (17) being facing substantially downwards with respect to a normal setup of use of said low chainstay (16), said fixing bracket (12) being fixed to said fixing plate (17) with corresponding fixing means.

2. Device according to claim 1, **characterized in that** said fixing plate (17) has a substantially parallelepiped shape and has at least one fixing hole (18) developing according to a screwing direction (Y1) transverse to said longitudinal development axis (X) of said low chainstay (16).

3. Device according to the preceding claim, **characterized in that** said fixing plate (17) has two fixing holes (18, 19) both developing according to a respective fixing direction (Y1, Y2) transverse to the longitudinal development axis (X) of said low chainstay (16), said fixing holes (18, 19) being arranged aligned along a same direction substantially parallel to said longitudinal development axis (X).

4. Device according to the preceding claim, **characterized in that** said fixing holes (18, 19) are threaded holes.

5. Device according to claim 2, **characterized in that** said low chainstay (16, 116) has at least one through hole (20, 120) at said at least one fixing hole (18, 118) of said fixing plate (17, 117), said at least one through hole (20, 120) of said low chainstay (16, 116) being coaxial to said at least one fixing hole (18, 118) of said fixing plate (17, 117) and being facing said fixing hole (18, 118) of said fixing plate (17, 117).

6. Device according to the preceding claim, **characterized in that** said low chainstay (116) has two through holes (120, 122) at said at least one fixing hole (118) of said fixing plate (117), said through holes (120, 122) being coaxial to said fixing hole (118), a first through hole (120) being facing said fixing hole (118), the second through hole (122) being defined in a diametrically opposite position of said low chainstay (116) with respect to said longitudinal development axis (X) of the same low chainstay (116).

7. Device according to one or more of the preceding claims, **characterized in that** said fixing plate (217) comprises a centring relief (230) configured to couple with a corresponding counter-shaped centring hole (231) defined on said low chainstay (216).

8. Device according to one or more of the preceding claims, **characterized by** comprising an auxiliary fixing plate (340) welded on a same section (316a) of said low chainstay (316) in an angularly different position with respect to said fixing plate (317) with reference to said longitudinal development axis (X) of said low chainstay (316).

9. Device according to the preceding claim, **characterized in that** said auxiliary fixing plate (340) is positioned on said low chainstay (316) in a diametrically opposite position with respect to said fixing plate (317).

10. Device according to one or more of the preceding claims, **characterized in that** said fixing plate (17) comprises an anti-rotation shaping (50, 250, 450) configured to couple with a counter-shaped anti-rotation portion (53, 253) defined on said fixing bracket (12, 212) of said cycle stay (11).

11. Device according to the preceding claim, **characterized in that** said anti-rotation shaping (50) comprises two annular reliefs (51, 52).

12. Device according to claim 10, **characterized in that** said anti-rotation shaping (450) comprises a recess (451).

13. Device according to claim 10, **characterized in that** said anti-rotation shaping (550) comprises a wedge-shaped relief (551) that develops radially with respect to said longitudinal development axis (X).

14. Device according to one or more of the preceding claims, **characterized in that** said fixing plate (717) has a substantially parallelepiped shape with the two opposite front (717a) and rear (717b) ends having a semicircle profile.
